(19) Europäisches Patentamt / European Patent Office / Office européen des brevets

(11) **EP 4 295 377 B1**

(12) **EUROPEAN PATENT SPECIFICATION**

(45) Date of publication and mention
of the grant of the patent:
**16.10.2024  Bulletin 2024/42**

(21) Application number: **21706884.0**

(22) Date of filing: **17.02.2021**

(51) International Patent Classification (IPC):
**G21G 1/02** *(2006.01)*          **G21F 7/06** *(2006.01)*
**G21K 5/08** *(2006.01)*

(52) Cooperative Patent Classification (CPC):
**G21F 7/067; G21G 1/02; G21K 5/08;** Y02E 30/30

(86) International application number:
**PCT/EP2021/053920**

(87) International publication number:
**WO 2022/174897 (25.08.2022 Gazette 2022/34)**

(54) **TARGET TRANSPORT SYSTEM FOR A RADIONUCLIDE GENERATION SYSTEM**

**ZIELTRANSPORTSYSTEM FÜR EIN RADIONUKLIDERZEUGUNGSSYSTEM**

**SYSTÈME DE TRANSPORT DE CIBLE POUR UN SYSTÈME DE GÉNÉRATION DE RADIONUCLÉIDES**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.12.2023  Bulletin 2023/52**

(73) Proprietor: **Framatome GmbH
91052 Erlangen (DE)**

(72) Inventor: **EDER, Maximilian
91056 ERLANGEN (DE)**

(74) Representative: **Lavoix
Bayerstraße 83
80335 München (DE)**

(56) References cited:
**WO-A1-2020/025120      US-A- 3 263 081
US-A1- 2013 170 927**

**Description**

The present invention relates to a target transport system for a radionuclide generation system.

Radionuclides are used in various fields of technology and science, as well as for medical purposes. Usually, radionuclides are produced in research reactors or cyclotrons. Since the number of facilities for commercial production of radionuclides is limited and expected to decrease, it is desired to provide alternative production sites.

A commercial nuclear reactor can be used for producing radionuclides. In particular, conventional aero-ball measuring systems or other instrumentation tube systems of the commercial reactor can be modified and/or supplemented to enable an effective and efficient production of radionuclides. Some of the instrumentation tubes for example of a commercial aero-ball measuring system or Traversing Incore Probe (TIP) system are used to guide the irradiation targets into the reactor core and to lead the activated irradiation targets out of the reactor core. The activation of the targets is optimized by positioning the irradiation targets in predetermined areas of the reactor core having a neutron flux sufficient for converting the parent material in the irradiation targets completely into the desired radionuclide.

For example, WO 2017/012655A describes a radionuclide generation system comprising:

> an instrumentation tube system of a nuclear reactor including at least one instrumentation finger extending into a core of the nuclear reactor, wherein the instrumentation tube system is configured to permit insertion and removal of irradiation targets into the instrumentation finger; and
> a target drive system including a conduit system and configured to insert the irradiation targets into the instrumentation finger in a predetermined linear order and to remove the irradiation targets from the instrumentation finger.

The target drive system is typically pneumatically operated, which means that a pressurized gas is driven through the conduit system of the target drive system so as to displace the irradiation targets from one location to another within the radionuclide generation system.

When operating the radionuclide generation system, it is important to be able to count the targets going in and out of the nuclear reactor core in order to ensure that all the targets which have entered the core also leave the core.

However, the sensors described in WO 2017/012655A are not entirely satisfactory.

Indeed, due to the pneumatic drive, most of the targets typically move through the conduits of the transport system as target trains, in which the targets are in contact with each other at their axial ends.

US 2013/170927 A1 describes apparatuses and methods produce radioisotopes in instrumentation tubes of operating commercial nuclear reactors.

The inventors of the present invention have found that the existing sensor arrangements, comprising one single sensor at each counting location, do not allow reliably counting the targets of such target trains. Indeed, these targets are vibrating and rotating transversally in the conduit, i.e. moving perpendicularly to their primary movement direction through the conduit, which makes recognition of multiple targets very close to each other very difficult with existing systems, because it is not possible to resolve their geometric profile or the gaps between the carriers.

One aim of the invention is therefore to provide a target transport system for a radionuclide generation system, which allows accurately and reliably counting the number of targets entering or exiting the core of the nuclear reactor.

For this purpose, the invention relates to a target transport system according to claim 1.

The target transport system may further comprise one or more of the features of claims 2 to 11, taken alone or according to any technically possible combination.

The invention also relates to a radionuclide generation system according to claim 12.

The radionuclide generation system may further comprise one or more of the features of claims 13 or 14, taken alone or according to any technically possible combination.

The invention also relates to a method for counting irradiation targets according to claim 15.

The method may further comprise one or more of the features of claims 16 to 18, taken alone or according to any technically possible combination.

The invention will be better understood upon reading the following description, given only by way of example, and with reference to the appended drawings, where:

- Figure 1 is a schematic cross-sectional view of a part of a target transport system according to a first embodiment, taken along a plane parallel to the axis of the conduit;
- Figure 2 is a schematic cross-sectional view of a part of a target transport system according to the first embodiment, taken along a plane perpendicular to the axis of the conduit;
- Figure 3 is a perspective view of a sensor support;
- Figure 4 is a cross-sectional view of a sensor support, taken along a plane parallel to the axis of the conduit;
- Figure 5 is a schematic view of a target counting method according to the invention;
- Figure 6 is a graph showing the signals obtained when carrying out the target counting method according to one example; and

- Figure 7 is a view analogous to Figure 2 of a part of a target transport system according to a second embodiment.

The invention relates to a target transport system 1 for a radionuclide generation system. The radionuclide generation system is intended for producing activated irradiation targets in a nuclear reactor.

The target transport system 1 is in particular located in a nuclear reactor, and for example at least partially in a core of a nuclear reactor.

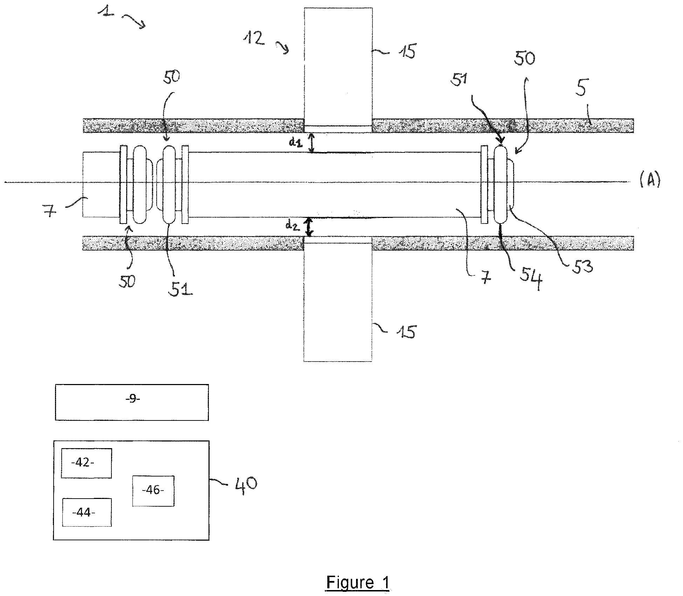

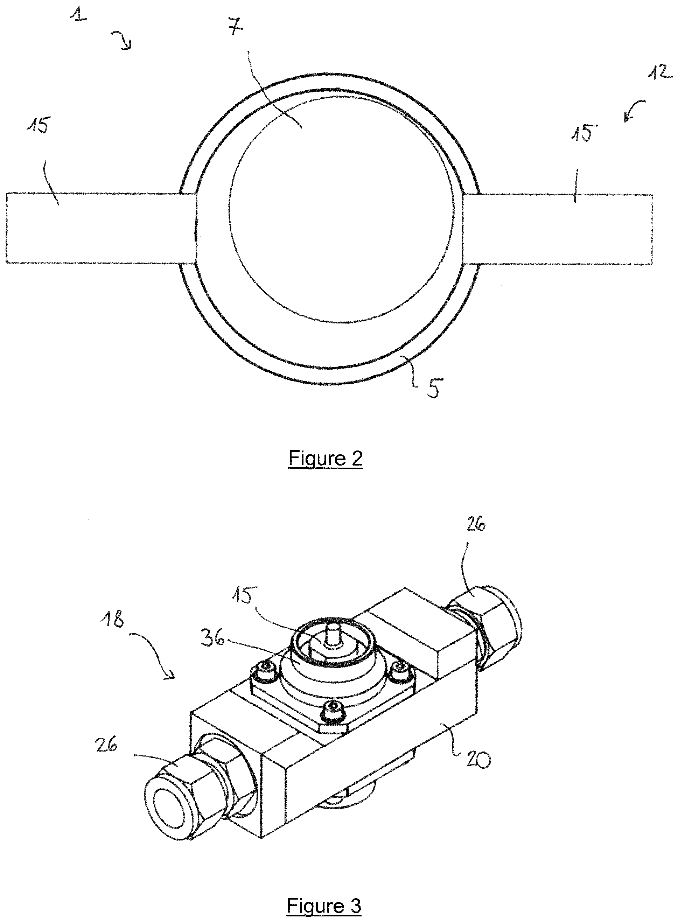

As shown in Figures 1 and 2, the target transport system 1 comprises:

- a conduit 5 for transporting irradiation targets 7 through the radionuclide generation system;
- a target drive system 9 configured to drive the irradiation targets 7 through said conduit 5;
- a counting system 12 configured for counting the number of irradiation targets 7 passing though the conduit 5.

The conduit 5 has a central axis A, defining an axial direction of the conduit 5. The conduit 5 for example has a circular cross-section.

The target drive system 9 is advantageously pneumatically operated, and for example uses a pressurized gas, such as nitrogen or air, for driving the irradiation targets 7 through the conduit 5. The target drive system 9 for example comprises a source of pressurized gas.

Preferably, the target drive system 9 comprises one or more pneumatically operated valve batteries (not shown) for separate control of the insertion and transport of the irradiation targets 7 through the conduit 5. Moreover, the target drive system 9 may further comprise a gate system (not shown) including several mechanical and/or electromechanical devices configured to guide the irradiation targets 7 into selected guide tubes in the reactor core, for example into selected conduits of the instrumentation tube system and instrumentation fingers in the reactor core.

The counting system 12 comprises at least two distance sensors 15, each configured for measuring a radial distance $d_1$, respectively $d_2$, between the distance sensor 15 and the irradiation target 7. In this context, the "radial distance" is measured along a radius of the conduit 5. The distance sensors 15 each output a distance signal $s_1(t)$, $s_2(t)$.

The distance sensors 15 are preferably inductive sensors, and for example eddy current sensors. Inductive sensors are able to withstand high radiation doses, and their output signal is further not disturbed by the radiation of the passing irradiation targets 15. The signal output of each inductive sensor is proportional to the distance between the sensor and the irradiation target 7. The cut-off frequency of the distance sensors 15 is chosen depending on the geometry and speed of displacement of the irradiation targets 7. It is for example equal to 20 kHz. The sampling rate is for example greater than or equal to 20 kilosample/s.

The inductive sensors are preferably analog sensors.

The at least two distance sensors 15 are arranged at a same axial position along the conduit 5. They are regularly spaced along the circumference of the conduit 5 with a constant angular spacing.

More particularly, in the target transport system 1 according to the first embodiment shown more particularly in Figures 1 to 4, the counting system 12 comprises exactly two distance sensors 15 at a given axial location along the conduit 5, these distance sensors 15 facing each other along a radial direction of the conduit 5. The two distance sensors 15 are spaced at an angle of 180° from one another. They are arranged along the same axis.

The two distance sensors 15 are arranged symmetrically relative to a median plane of the conduit 5, passing through the central axis of the conduit 5.

Each distance sensor 15 operates with a different carrier frequency than the other distance sensor(s) 15 in order to avoid interference.

As shown in Figure 1, the counting system 12, and more particularly the distance sensors 15, are preferably arranged at a straight portion of the conduit 5.

The target drive system 9 is in particular configured for driving the irradiation targets 7 through the conduit 5 in such a manner than they pass in front of the distance sensors 15 with a constant speed.

In the embodiment shown in Figures 1 to 4, the target transport system 1 further comprises a sensor support 18 mounted on said conduit 5. The sensor support 18 is not shown in Figures 1 and 2 to simplify the drawings.

In this example, the distance sensors 15 are mounted on the sensor support 18 such that no obstacle for the sensor measurement is located between the distance sensor 15 and the interior of the conduit 5. In this context, obstacles for the sensor measurement are obstacles which modify the sensor signal, for example obstacles made of a metallic material. In particular, no portion of the conduit 5 extends radially between the distance sensor 15 and the interior of the conduit 5.

The sensor support 18 is in particular configured to be pressure-tight.

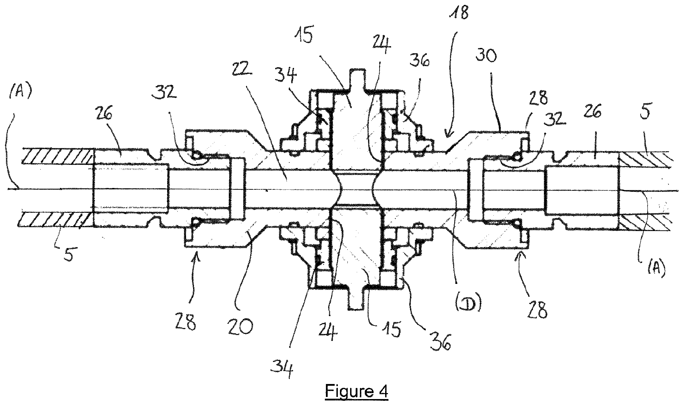

A sensor support 18 according to an example is shown more particularly in Figures 3 and 4. In this example, the sensor support 18 comprises a central body 20 delimiting a central axial passage 22 intended for the passage of the irradiation targets 7. More particularly, as shown in Figure 4, the conduit 5 is interrupted at the sensor support 18 and extends on either side of the sensor support 18 in an axial direction thereof. The central axis A of the conduit 5 and the central axis D of the central axial passage 22 are aligned.

The central passage 22 for example has a circular cross-section.

For each distance sensor 15, the central body 20 further comprises a through-hole 24, intended for receiving the distance sensor 15. The through-hole 24 extends through the central body 20 and opens into the central axial passage 22. In the example shown in Figures 3 and 4, the sensor support 18 comprises two through-holes 24 facing each other across the central axial passage 22. Each distance sensor 15 is arranged in a respective through-hole 24 so as to be able to measure the radial distance between the distance sensor 15 and an irradiation target 7 passing through the central axial passage 22. According to the example shown in Figure 4, the diameter of the central axial passage 22 is constant from one axial end 28 of the central body 20 to the other. The diameter of the central axial passage 22 is in particular equal to the inner diameter of the conduit 5.

Optionally, the sensor support 18 further comprises a tubular insert (not shown) arranged in front of the distance sensors 15 inserted in the through-holes 24. The inner diameter of the tubular insert is approximatively equal to the inner diameter of the conduit 5. The tubular insert is made of a material which does not influence the measurements of the distance sensors 15, and in particular of a synthetic material, for example plastic, in particular PEEK (Polyether ether ketone). The purpose of this tubular insert is to protect the distance sensor's surfaces, and to prevent a collision of the irradiation targets 7 with the edges of the sensor support 18.

The sensor support 18 further comprises, at each axial end 28 of the central body 20, a fitting 26 configured for mounting the sensor support 18 onto the conduit 5. More particularly, in the example shown in Figure 4, where the conduit 5 is interrupted at the sensor support 18, each fitting 26 is mounted on a respective end of the conduit 5.

The fitting 26 is connected to the central body 20 and to the conduit 5 in a fluid-tight manner, for example through adapted sealing gaskets. In the example shown in Figure 4, the central body 20 comprises, at each of its axial ends 28, an enlarged portion 30 which delimits a seat 32 receiving the fitting 26 in a fluid-tight manner.

The distance sensors 15 are advantageously mounted on the sensor support 18 so as to be displaceable relative thereto along a radial direction. This possibility of displacement allows adjusting the position of the distance sensors 15 along a radial direction.

Advantageously, the sensor support 18 comprises displacement means configured for displacing the distance sensors 15 along the radial direction. In the example shown in Figure 4, these displacement means comprise a piston 34 connected to the distance sensor 15, for example through corresponding threads, and a piston cover 36 provided on the central body 20 and delimiting a piston chamber extending around the through-hole 24. The piston 34 is movable along a radial direction inside the piston chamber relative to the central body 20, this movement resulting in a displacement of the distance sensor 15 in the radial direction.

The central body 20 is advantageously made of metal, and for example comprises steel, for example stainless steel, and/or aluminum.

According to the invention, the transport system 1 further comprises a calculator 40, such as a computer. The calculator 40 in particular comprises a processor 42, a memory 44 and a media reader 46.

In this example, the calculator 40 interacts with a computer program product that contains program instructions to be carried out by the processor 42. The computer program product is stored on a data carrier.

The data carrier is a medium that can be read by the calculator 40, usually by the processor 42 via the media reader 46. The readable data carrier is a medium adapted for storing instructions and capable of being coupled to a bus of a computer system. For example, the readable data medium is a floppy disk, optical disk, CD-ROM, magnetooptical disk, ROM, RAM memory, EPROM memory, EEPROM memory, magnetic card, optical card, USB stick, or SSD disk.

The computer program product can be loaded by the processor 42 of the calculator 40 and is adapted to implement a target counting method according to the invention when the computer program is run on the processor 42. The target counting method will be described in detail in the continued description.

In a second example, the computer 40 comprises one or more programmable logic components, such as FPGAs (Field Programmable Gate Array), or such as dedicated integrated circuits, such as ASICs (Application Specific Integrated Circuits) adapted to carry out the target counting method according to the invention.

In a third example, the computer 40 comprises a central processing unit (CPU) and a graphics processing unit (GPU), with the GPU acting as a co-processor, which are adapted to carry out the target counting method according to the invention.

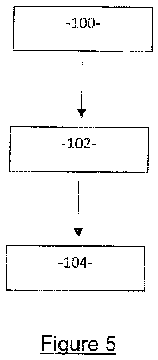

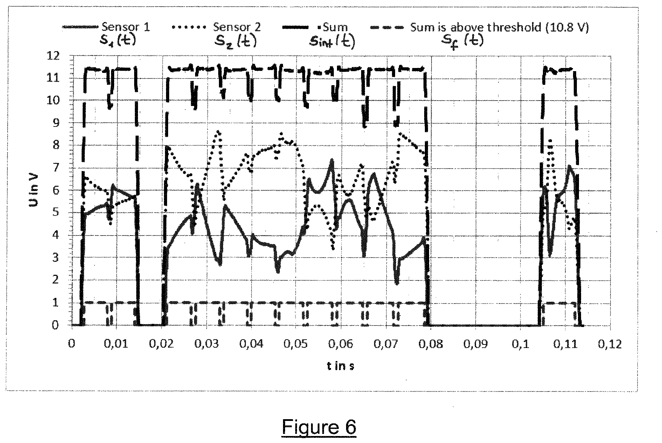

The target counting method according to the invention will now be described with reference to Figures 5 and 6.

The distance signals $s_1(t)$, $s_2(t)$ shown in the graph in Figure 6 correspond to the distance signals obtained when using the target transport system 1 according to the first embodiment of the invention, in which the counting system 12 comprises exactly two distance sensors 15 at a considered axial location along the conduit 5. In addition, the distance signals $s_1(t)$, $s_2(t)$ were obtained during the passage of twelve irradiation targets 7 through the conduit 5.

In a first step 100 of the method, the calculator 40 receives the distance signals $s_1(t)$, $s_2(t)$ obtained by the distance sensors 15 during the passage of the irradiation targets 7. The distance signals $s_1(t)$, $s_2(t)$ correspond to the radial distance $d_1$, $d_2$ between the irradiation target 7 and the respective distance sensor 15 as a function of time or are proportional thereto. These distance signals $s_1(t)$, $s_2(t)$ are shown in Figure 6. As can be seen on this Figure, the distance signals $s_1(t)$, $s_2(t)$ have a

chaotic component, which is due to the movement of the irradiation targets 7 perpendicular to the axial direction, away or towards the distance sensors 15. Due to this chaotic component, it is not possible to reliably detect the passage of an irradiation target 7 in front of the distance sensor 15 based on the distance measurement obtained by only one of the distance sensors 15.

According to the invention, in a second step 102, the calculator 40 calculates an intermediate signal $s_{int}(t)$ based on the distance signals $s_1(t)$, $s_2(t)$. More particularly, the amplitude of the intermediate signal $s_{int}(t)$ is linearly related to the sum of the distance signals $s_1(t)$, $s_2(t)$ obtained by the distance sensors 15, and for example proportional to or equal to the sum of the distance signals $s_1(t)$, $s_2(t)$ obtained by the distance sensors 15. The amplitude of the intermediate signal $s_{int}(t)$ is linearly related to the diameter profile of the irradiation targets 7 passing through the conduit 5. In this context, the diameter profile of an irradiation target 7 corresponds to the diameter of the irradiation target 7 as a function of the distance from one end of the target 7. Since an irradiation target 7 passes the distance sensors 15 at a constant speed, this diameter profile can also be expressed as a function of time.

In the first embodiment of the invention, in which the counting system 12 comprises exactly two distance sensors 15 at a given axial location along the conduit 5, the second step 102 advantageously comprises summing the distance signals $s_1(t)$, $s_2(t)$ from the two distance sensors 15. In this embodiment, the intermediate signal $s_{int}(t)$, shown in Figure 6, corresponds to the sum of the two distance signals $s_1(t)$, $s_2(t)$. As can be seen in this Figure, the summing of the two distance signals $s_1(t)$, $s_2(t)$ removes the chaotic component due to the movements of the irradiation targets 7 perpendicular to the axial direction of the conduit 5.

In this context, the sum of the distance signals $s_1(t)$, $s_2(t)$ is related to the diameter profile $d_{target}(t)$ of the irradiation targets 7 by the following formula: $d_{target}(t) = d_{conctuit} - (s_1(t) + s_2(t))$, where $d_{conduit}$ is the inner diameter of the conduit 5.

In a third step 104, the calculator 40 determines the number of irradiation targets 7 passing through the conduit 5 based on the intermediate signal $s_{int}(t)$.

More particularly, the determination of the number of irradiation targets 7 passing through the conduit 5 comprises the application of a pattern recognition algorithm to the intermediate signal $s_{int}(t)$.

According to an example, the pattern recognition algorithm is an edge detection algorithm.

More particularly, application of the edge detection algorithm comprises the application of a comparator, in particular a comparator with hysteresis, for example a Schmitt trigger, for transforming the intermediate signal $s_{int}(t)$ into a final binary signal $s_f(t)$.

In this step, the threshold(s) of the comparator is (are) chosen so as to be able to detect the portions of the intermediate signal $s_{int}(t)$ corresponding to the passage of an irradiation target 7 in front of the distance sensors 15. The value of the threshold(s) depends, in particular, on the diameter of the irradiation targets 7. The threshold(s) may for example be adjusted by calibration measurements, preferably in the installation phase of the target transport system 1.

For example, if the intermediate signal $s_{int}(t)$ is above the threshold of the comparator, the value of the final binary signal $s_f(t)$ is logic "1".

In this example, the third step 104 further comprises, after the application of the edge detection algorithm, counting the number of irradiation targets 7 having passed through the conduit 5 based on the final binary signal $s_f(t)$. More particularly, counting the number of irradiation targets 7 having passed through the conduit 5 comprises counting the pulses in the final signal ($s_f(t)$) having a width greater than or equal to a predetermined threshold T. For example, during this step, a filter is applied to the binary final signal $s_f(t)$ to determine the number of peaks having a width greater than a predetermined threshold T. The width of the peaks is calculated by detecting the rising and falling edges of the final binary signal $s_f(t)$ and determining the time difference between the thus detected rising and falling edges or by applying an integrator circuit to the pulses of the binary signal $s_f(t)$.

The predetermined threshold T depends in particular on the length of the irradiation target 7, as well as on the speed of the irradiation target 7. For example, for an irradiation target 7 having a length equal to 7 cm and a speed of the irradiation target 7 equal to 30 m/s at the distance sensors 15, it takes roughly 2 ms to pass the sensors 15. Therefore, a threshold T equal to 1 ms may be chosen, to assume the targets will not pass with a speed greater than (7 cm)/ 1 ms = 70 m/s. The threshold T is chosen so as to be able to remove particular interferences which may be coupled into the cables of the distance sensors 15.

Advantageously, the irradiation targets 7 have specific geometric features, for example diameter variations, which help distinguishing individual irradiation targets 7 in the intermediate signal $s_{int}(t)$ through application of an edge detection algorithm with an appropriate threshold T. For example, the irradiation target 7 shown in Figure 1 has, at its axial ends 50, ends caps 51 having a geometry including a variation in diameter. More particularly, the end caps 51 comprise, at their axial ends, a section 53 of smaller diameter than the rest of the irradiation target 7. This smaller diameter end section 53 results in a drop in the intermediate signal $s_{int}(t)$ between two irradiation targets 7, so that the irradiation targets 7 can be distinguished through application of an edge detection algorithm. In the example shown in Figure 1, the end caps 51 further comprise, next to the small diameter end section 53, a section 54 of greater diameter than the rest of the irradiation target 7.

Other examples of pattern recognition algorithms that may be used in step 104 are peak detection, template matching or any other adapted pattern recognition algorithm known for example from image processing.

Optionally, the calculator 40 applies a deconvolution algorithm to the intermediate signal $s_{int}(t)$ prior to the application of the pattern recognition algorithm, and for example prior to the application of the edge detection algorithm described above. More particularly, the deconvolution algorithm uses the sensor's sensitivity profile $s(x)$ to approximate the original geometric profile of the irradiation targets 7. This allows removing the effect of the sensor's sensitivity profile $s(x)$ and therefore improves the resolution of the approximation of the geometric profile of the target train. Indeed, the intermediate signal $s_{int}(t)$ results from the convolution of two functions: the geometrical profile of the target train $g(x)$ and the sensitivity profile of the sensor $s(x)$, divided by the speed of the passing irradiation target 7.

The sensor's sensitivity profile $s(x)$ may be stored on the data carrier. It is for example determined through testing.

The signal processing involved in steps 100, 102, 104 described above is, for example, performed by a computer program product stored on the readable data carrier and executed by the processor 42.

According to an alternative, the signal processing involved in steps 100, 102, 104 is done by adapted analog circuits, known to the skilled person. For example, step 104 could be carried out using analog circuits comprising flip-flops.

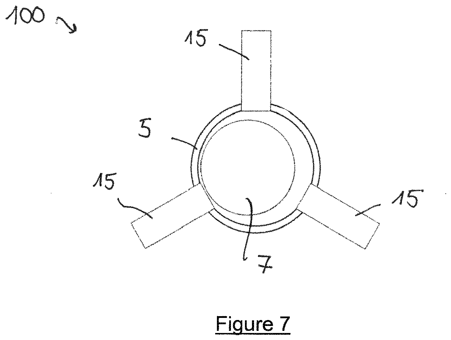

A target transport system 100 according to a second embodiment is shown in Figure 7. In the description of this embodiment, the same reference numerals have been used for designating the elements which have already been described with respect to the first embodiment.

The target transport system 100 according to the second embodiment differs from the target transport system 1 according to the first embodiment only in that the counting system 9 comprises three distance sensors 15 at a considered axial location along the conduit 5, instead of two.

The three distance sensors 15 are regularly spaced along the circumference of the conduit 5 with a constant angular spacing. More particularly, in this embodiment, the angle between adjacent distance sensors 15 is equal to 120°.

In this embodiment, the sum of the distance signals $s_1(t)$, $s_2(t)$, $s_3(t)$ is related to the diameter profile $d_{target}(t)$ of the irradiation targets 7 passing through the conduit 5 by the following formula:

$$d_{target}(t) = d - \frac{2}{3}(s_1(t) + s_2(t) + s_3(t))$$

where

d_{target}(t) is the diameter profile of the irradiation targets 7 passing through the conduit 5,
d is the diameter of the conduit 5, and
$s_1(t)$, $s_2(t)$, $s_3(t)$ are the distance signals obtained by the three distance sensors 15.

The method associated with the target counting system 100 according to this third embodiment differs from the method according to the first embodiment described above only in that, in step 102, the intermediate signal $s_{int}(t)$ corresponds to the sum of the three distance signals $s_1(t)$, $s_2(t)$, $s_3(t)$ obtained by the three distance sensors 15.

The target counting system according to a third embodiment (not shown) differs from the target counting system 1 according to the first embodiment only in that the number of distance sensors 15 at a given axial location along the conduit 5 is equal to n, where n is greater than three, the n distance sensors 15 being regularly spaced along the circumference of the conduit 5 with a constant angular spacing. In this case, the angle between adjacent distance sensors is equal to $\frac{360}{n}$. n is for example smaller than or equal to 6.

In this embodiment, the sum of the distance signals $s_1(t)$, $s_2(t)$, ... $s_n(t)$ is related to the diameter profile $d_{target}(t)$ of the irradiation targets 7 passing through the conduit 5 by the following formula:

$$d_{target}(t) = d - \frac{2}{n}\sum_{i}^{n} s_i(t)$$

where

d_{target}(t) is the diameter profile of the irradiation targets 7 passing through the conduit 5,
d is the diameter of the conduit 5,
$s_i(t)$ are the distance signals obtained by the distance sensors 15.

The method associated with the target counting system according to this third embodiment differs from the method according to the first embodiment described above only in that, in step 102, the intermediate signal $s_{int}(t)$ corresponds to the sum of the n distance signals $s_1(t)$, $s_2(t)$,..., $s_n(t)$ obtained by the n distance sensors 15.

The accuracy of the target counting system 12 increases as the number of distance sensors 15 increases. However, the accuracy obtained with two distance sensors 15 as described in the first embodiment is sufficient for most applications.

The counting system according to the invention is advantageous, since it allows counting the number of irradiation targets 7 entering or exiting the core of a nuclear reactor in a particular accurate and reliable manner, even at relatively high target speeds, for example greater than 10 m/s and in the case where the irradiation targets 7 are in direct contact within a target train in the conduit 5.

The invention also relates to a radionuclide generation system comprising a target transport system 1;100 as described above, said target transport system 1;100 being configured for inserting the irradiation targets 7 into a predetermined location in the core of the nuclear reactor in a predetermined linear order.

The radionuclide generation system more particularly comprises at least one guide tube extending into the core of the nuclear reactor, the target transport system 1,100 being configured for inserting the irradiation targets 7 into said guide tube in a predetermined linear order.

According to one embodiment, the nuclear reactor is a heavy water reactor, such as, for example, a CANDU (CANada Deuterium Uranium) type heavy water reactor. In this case, the guide tube is, for example, a guide tube inserted in a port in a reactivity mechanism deck of the heavy water reactor, as is described, for example, in prior application WO 2016/207054 A1.

According to an alternative, the nuclear reactor is a light water reactor, for example a pressurized water reactor. In this case, the guide tube is, for example, an instrumentation finger of the nuclear reactor, as is described, for example, in prior application WO2017/012655 A1.

Such systems are known to the skilled person and are not described in detail in the present patent application.

The irradiation target 7, which is used in the radionuclide generation system and in the target counting method described above, in particular comprises an envelope encapsulating a core made of non-fissile material and comprising a suitable precursor material for generating radionuclides, which are to be used for medical and/or other purposes.

The envelope has a shape which is rotationally symmetric, and for example a circular cross-section.

The envelope encapsulates the core in a hermetic manner. It is for example made of a material which is not activated neutron flux, for example of a material comprising polyether ether ketone (PEEK). The envelope may preferably comprise a portion made of a metallic material so as to allow for an improved detection, for example using an inductive sensor.

The core in particular comprises the precursor material in powder form.

More preferably, the irradiation targets 7 consist of the precursor material, which converts to a desired radionuclide upon activating by exposure to neutron flux present in the reactor core of an operating commercial nuclear reactor. Useful precursor materials are Mo-98, Yb-176 and Lu-176, which are converted to Mo-99 and Lu-177, respectively. It is understood, however, that the invention is not limited to the use of a specific precursor material.

As described above with reference to Figure 1, according to a particular example, the envelope comprises, at the axial ends 50 of the irradiation target 7, ends caps 51 comprising, at their axial ends, a section 53 of smaller diameter than the rest of the irradiation target 7. In the example shown in Figure 1, the ends caps 51 further comprise, next to the small diameter end section 53, a section 54 of greater diameter than the rest of the irradiation target 7.

## Claims

1. A target transport system (1;100) for a radionuclide generation system, said target transport system (1;100) comprising:

   - a conduit (5) for transporting irradiation targets (7) through the radionuclide generation system;
   - a target drive system (9) configured to drive the irradiation targets (7) through said conduit (5);
   - a counting system (12) configured for counting the number of irradiation targets (7) passing though the conduit (5);

   **characterized in that**
   said counting system (12) comprises at least two distance sensors (15), each configured for measuring a radial distance ($d_1$, $d_2$) between the distance sensor (15) and the irradiation target (7), said distance sensors (15) being arranged at a same axial position along the conduit (5) and being regularly spaced along the circumference of the conduit (5) with a constant angular spacing.

2. - Transport system (1;100) according to claim 1, wherein said distance sensors (15) are inductive sensors, in particular eddy-current sensors.

3. - Transport system (1;100) according to any one of the preceding claims, further comprising a sensor support (18) mounted on said conduit (5), the distance sensors (15) being mounted on the sensor support (18) such that, for each distance sensor (15), no obstacle for the sensor signal is located between the distance sensor (15) and the interior of the conduit (5).

4. - Transport system (1;100) according to any one of the preceding claims, further comprising a calculator (40) configured to carry out the following method steps:

   - receive distance signals ($s_1(t)$, $s_2(t)$; $s_1(t)$, $s_2(t)$, $s_3(t)$) obtained by the distance sensors (15);
   - calculate an intermediate signal ($s_{int}(t)$) whose amplitude depends on the sum of the distance signals ($s_1(t)$, $s_2(t)$; $s_1(t)$, $s_2(t)$, $s_3(t)$) from the dis-

tance sensors (15); and
- determine the number of irradiation targets (7) passing through the conduit (5) based on the intermediate signal ($s_{int}(t)$).

5. - Transport system (1 ;100) according to claim 4, wherein the step of calculating the intermediate signal ($s_{int}(t)$) includes summing the distance signals ($s_1(t)$, $s_2(t)$; $s_1(t)$, $s_2(t)$, $s_3(t)$) from the distance sensors (15), the intermediate signal ($s_{int}(t)$) in particular corresponding to or being proportional to the sum of the distance signals ($s_1(t)$, $s_2(t)$; $s_1(t)$, $s_2(t)$, $s_3(t)$) from the distance sensors.

6. - Transport system (1;100) according to claim 4 or claim 5, wherein the determination of the number of irradiation targets (7) passing through the conduit (5) comprises the application of a pattern recognition algorithm to the intermediate signal ($s_{int}(t)$).

7. - Transport system (1;100) according to claim 6, wherein the pattern recognition algorithm is an edge detection algorithm.

8. - Transport system (1;100) according to claim 7, wherein the application of the edge detection algorithm comprises applying a comparator for transforming the intermediate signal ($s_{int}(t)$) into a final binary signal ($s_f(t)$).

9. - Transport system (1;100) according to claim 8, wherein the step of determining the number of irradiation targets (7) passing through the conduit (5) further comprises counting the number of irradiation targets (7) based on the final binary signal ($s_f(t)$), in particular by counting the pulses in the final signal ($s_f(t)$) having a width greater than or equal to a predetermined threshold.

10. - Transport system (1;100) according to any one of claims 4 to 9, wherein the method further comprises, prior to the application of the pattern recognition algorithm, a step of applying a deconvolution algorithm to the intermediate signal ($s_{int}(t)$).

11. - Transport system (1;100) according to any one of the preceding claims, wherein the counting system (12) comprises exactly two distance sensors (15) at a given axial location along the conduit (5), said distance sensors (15) facing each other along a radial direction of the conduit (5).

12. - Radionuclide generation system comprising a target transport system (1;100) according to any one of the preceding claims, said target transport system (1;100) being configured for inserting the irradiation targets (7) in a predetermined linear order into a predetermined location in the core of the nuclear reactor.

13. - Radionuclide generation system according to claim 12, further comprising at least one guide tube extending into the core of the nuclear reactor, said target transport system (1;100) being configured for inserting the irradiation targets (7) into the guide tube in a predetermined linear order.

14. - Radionuclide generation system according to claim 12 or claim 13, wherein the nuclear reactor is a heavy water reactor.

15. - A method for counting irradiation targets (7) passing through a conduit (5) in a radionuclide generation system using the target transport system (1; 100) according to any one of claims 1 to 9, said method comprising the following steps:

    - receive the distance signals ($s_1(t)$, $s_2(t)$; $s_1(t)$, $s_2(t)$, $s_3(t)$) from the distance sensors (15);
    - calculate an intermediate signal ($s_{int}(t)$) whose amplitude depends on the sum of the distance signals ($s_1(t)$, $s_2(t)$; $s_1(t)$, $s_2(t)$, $s_3(t)$) from the distance sensors (15); and
    - determine the number of irradiation targets (7) passing through the conduit (5) based on the intermediate signal ($s_{int}(t)$).

16. - Method according to claim 15, wherein the determination of the number of irradiation targets (7) passing through the conduit (5) comprises the application of a pattern recognition algorithm to the intermediate signal ($s_{int}(t)$).

17. - Method according to claim 16, wherein the pattern recognition algorithm is an edge detection algorithm.

18. - Method according to any one of claims 15 to 17, wherein the step of calculating the intermediate signal ($s_{int}$) includes summing the distance signals ($s_1(t)$, $s_2(t)$; $s_1(t)$, $s_2(t)$, $s_3(t)$) from the distance sensors (15), the intermediate signal ($s_{int}(t)$) in particular corresponding to or being proportional to the sum of the distance signals ($s_1(t)$, $s_2(t)$; $s_1(t)$, $s_2(t)$, $s_3(t)$) from the distance sensors (15).

**Patentansprüche**

1. Ziel-Transportsystem (1; 100) für ein Radionukliderzeugungssystem, das Ziel-Transportsystem (1; 100) umfassend:

    - eine Leitung (5) zum Transportieren von Bestrahlungszielen (7) durch das Radionukliderzeugungssystem;
    - ein Zielantriebssystem (9), das konfiguriert ist, um die Bestrahlungsziele (7) durch die Leitung (5) anzutreiben;

- ein Zählsystem (12), das konfiguriert ist, um die Anzahl von Bestrahlungszielen (7) zu zählen, die die Leitung (5) durchlaufen;

**dadurch gekennzeichnet, dass**

das Zählsystem (12) mindestens zwei Abstandssensoren (15) umfasst, die jeweils zum Messen eines radialen Abstands ($d_1$, $d_2$) zwischen dem Abstandssensor (15) und dem Bestrahlungsziel (7) konfiguriert sind, wobei die Abstandssensoren (15) an einer gleichen axialen Position entlang der Leitung (5) angeordnet sind und entlang des Umfangs der Leitung (5) regelmäßig mit einem konstanten Winkelabstand beabstandet sind.

2. Transportsystem (1; 100) nach Anspruch 1, wobei die Abstandssensoren (15) induktive Sensoren, insbesondere Wirbelstromsensoren, sind.

3. Transportsystem (1; 100) nach einem der vorherigen Ansprüche, ferner umfassend einen Sensorhalter (18), der an der Leitung (5) montiert ist, wobei die Abstandssensoren (15) an dem Sensorhalter (18) montiert sind, sodass sich für jeden Abstandssensor (15) kein Hindernis für das Sensorsignal zwischen dem Abstandssensor (15) und dem Inneren der Leitung (5) befindet.

4. Transportsystem (1; 100) nach einem der vorherigen Ansprüche, ferner umfassend einen Rechner (40), der konfiguriert ist, um die folgenden Verfahrensschritte durchzuführen:

   - Empfangen von Abstandssignalen ($s_1(t)$, $s_2(t)$; $s_1(t)$, $s_2(t)$, $s_3(t)$), die von den Abstandssensoren (15) erlangt werden;
   - Berechnen eines Zwischensignals ($s_{int}(t)$), dessen Amplitude von der Summe der Abstandssignale ($s_1(t)$, $s_2(t)$; $s_1(t)$, $s_2(t)$, $s_3(t)$) von den Abstandssensoren (15) abhängt; und
   - Bestimmen der Anzahl von Bestrahlungszielen (7), die die Leitung (5) durchlaufen, basierend auf dem Zwischensignal ($s_{int}(t)$).

5. Transportsystem (1; 100) nach Anspruch 4, wobei der Schritt eines Berechnens des Zwischensignals ($s_{int}(t)$) ein Summieren der Abstandssignale ($s_1(t)$, $s_2(t)$; $s_1(t)$, $s_2(t)$, $s_3(t)$) der Abstandssensoren (15) beinhaltet, wobei das Zwischensignal ($s_{int}(t)$) insbesondere der Summe der Abstandssignale ($s_1(t)$, $s_2(t)$; $s_1(t)$, $s_2(t)$, $s_3(t)$) von den Abstandssensoren entspricht oder proportional dazu ist.

6. Transportsystem (1; 100) nach Anspruch 4 oder Anspruch 5, wobei die Bestimmung der Anzahl von Bestrahlungszielen (7), die die Leitung (5) durchlaufen, die Anwendung eines Mustererkennungsalgorithmus auf das Zwischensignal ($s_{int}(t)$) umfasst.

7. Transportsystem (1; 100) nach Anspruch 6, wobei der Mustererkennungsalgorithmus ein Randerkennungsalgorithmus ist.

8. Transportsystem (1; 100) nach Anspruch 7, wobei die Anwendung des Randerkennungsalgorithmus ein Anwenden eines Komparators zum Umwandeln des Zwischensignals ($s_{int}(t)$) in ein endgültiges Binärsignal ($s_f(t)$) umfasst.

9. Transportsystem (1; 100) nach Anspruch 8, wobei der Schritt eines Bestimmens der Anzahl von Bestrahlungszielen (7), die die Leitung (5) durchlaufen, ferner ein Zählen der Anzahl von Bestrahlungszielen (7) basierend auf dem endgültigen binären Signal ($s_f(t)$) umfasst, insbesondere durch Zählen der Impulse in dem endgültigen Signal ($s_f(t)$), die eine Breite aufweisen, die größer als oder gleich wie ein vorbestimmter Schwellenwert ist.

10. Transportsystem (1; 100) nach einem der Ansprüche 4 bis 9, wobei das Verfahren ferner vor der Anwendung des Mustererkennungsalgorithmus einen Schritt eines Anwendens eines Entfaltungsalgorithmus auf das Zwischensignal ($s_{int}(t)$) umfasst.

11. Transportsystem (1; 100) nach einem der vorherigen Ansprüche, wobei das Zählsystem (12) exakt zwei Abstandssensoren (15) an einer gegebenen axialen Stelle entlang der Leitung (5) umfasst, wobei die Abstandssensoren (15) einander entlang einer radialen Richtung der Leitung (5) zugewandt sind.

12. Radionukliderzeugungssystem, umfassend ein Ziel-Transportsystem (1; 100) nach einem der vorherigen Ansprüche, wobei das Ziel-Transportsystem (1; 100) konfiguriert ist, um die Bestrahlungsziele (7) in einer vorbestimmten linearen Reihenfolge in eine vorbestimmte Stelle in dem Kern des Kernreaktors einzuführen.

13. Radionukliderzeugungssystem nach Anspruch 12, ferner umfassend mindestens ein Führungsrohr umfasst, das sich in den Kern des Kernreaktors erstreckt, wobei das Ziel-Transportsystem (1; 100) konfiguriert ist, um die Bestrahlungsziele (7) in einer vorgegebenen linearen Reihenfolge in das Führungsrohr einzuführen.

14. Radionukliderzeugungssystem nach Anspruch 12 oder Anspruch 13, wobei der Kernreaktor ein Schwerwasserreaktor ist.

15. Verfahren zum Zählen von Bestrahlungstargets (7), die eine Leitung (5) in einem Radionukliderzeugungssystem durchlaufen, unter Verwendung des Ziel-Transportsystems (1; 100) nach einem der Ansprüche 1 bis 9, das Verfahren umfassend die folgenden Schritte:

- Empfangen der Abstandssignale ($s_1$(t), $s_2$(t); $s_1$(t), $s_2$(t), $s_3$(t)) von den Abstandssensoren (15);
- Berechnen eines Zwischensignals ($s_{int}$(t)), dessen Amplitude von der Summe der Abstandssignale ($s_1$(t), $s_2$(t); $s_1$(t), $s_2$(t), $s_3$(t)) von den Abstandssensoren (15) abhängt; und
- Bestimmen der Anzahl von Bestrahlungszielen (7), die die Leitung (5) durchlaufen, basierend auf dem Zwischensignal ($s_{int}$(t)).

16. Verfahren nach Anspruch 15, wobei die Bestimmung der Anzahl von Bestrahlungszielen (7), die die Leitung (5) durchlaufen, die Anwendung eines Mustererkennungsalgorithmus auf das Zwischensignal ($s_{int}$(t)) umfasst.

17. Verfahren nach Anspruch 16, wobei der Mustererkennungsalgorithmus ein Randerkennungsalgorithmus ist.

18. Verfahren nach einem der Ansprüche 15 bis 17, wobei der Schritt eines Berechnens des Zwischensignals ($s_{int}$) ein Summieren der Abstandssignale ($s_1$(t), $s_2$(t); $s_1$(t), $s_2$(t), $s_3$(t)) der Abstandssensoren (15) beinhaltet, wobei das Zwischensignal ($s_{int}$(t)) insbesondere der Summe der Abstandssignale ($s_1$(t), $s_2$(t); $s_1$(t), $s_2$(t), $s_3$(t)) von den Abstandssensoren (15) entspricht oder proportional dazu ist.

**Revendications**

1. Système de transport de cible (1 ; 100) pour un système de production de radionucléide, ledit système de transport de cible (1 ; 100) comprenant :

- un conduit (5) pour transporter les cibles d'irradiation (7) à travers le système de production de radionucléides ;
- un système d'entraînement de cible (9) configuré pour entraîner les cibles d'irradiation (7) à travers ledit conduit (5) ;
- un système de comptage (12) configuré pour compter le nombre de cibles d'irradiation (7) passant par le conduit (5) ;

**caractérisé en ce que**
ledit système de comptage (12) comprend au moins deux capteurs de distance (15), chacun configuré pour mesurer une distance radiale ($d_1$, $d_2$) entre le capteur de distance (15) et la cible d'irradiation (7), lesdits capteurs de distance (15) étant disposés à une même position axiale le long du conduit (5) et étant régulièrement espacés le long de la circonférence du conduit (5) avec un espacement angulaire constant.

2. Système de transport (1 ; 100) selon la revendication 1, dans lequel lesdits capteurs de distance (15) sont des capteurs inductifs, en particulier des capteurs à courant de Foucault.

3. Système de transport (1 ; 100) selon l'une quelconque des revendications précédentes, comprenant en outre un support de capteur (18) monté sur ledit conduit (5), les capteurs de distance (15) étant montés sur le support de capteur (18) de telle sorte que, pour chaque capteur de distance (15), aucun obstacle pour le signal du capteur n'est situé entre le capteur de distance (15) et l'intérieur du conduit (5).

4. Système de transport (1 ; 100) selon l'une quelconque des revendications précédentes, comprenant en outre un calculateur (40) configuré pour exécuter les étapes suivantes du procédé :

- recevoir les signaux de distance ($s_1$(t), $s_2$(t) ; $s_1$(t), $s_2$(t), $s_3$(t)) obtenus par les capteurs de distance (15) ;
- calculer un signal intermédiaire ($s_{int}$(t)) dont l'amplitude dépend de la somme des signaux de distance ($s_1$(t), $s_2$(t) ; $s_1$(t), $s_2$(t), $s_3$(t)) provenant des capteurs de distance (15) ; et
- déterminer le nombre de cibles d'irradiation (7) passant par le conduit (5) sur la base du signal intermédiaire ($s_{int}$(t)).

5. Système de transport (1 ; 100) selon la revendication 4, dans lequel l'étape de calcul du signal intermédiaire ($s_{int}$(t)) comprend la somme des signaux de distance ($s_1$(t), $s_2$(t) ; $s_1$(t), $s_2$(t), ss(t)) provenant des capteurs de distance (15), le signal intermédiaire ($s_{int}$(t)) correspondant notamment ou étant proportionnel à la somme des signaux de distance ($s_1$(t), $s_2$(t) ; $s_1$(t), $s_2$(t), ss(t)) provenant des capteurs de distance.

6. Système de transport (1 ; 100) selon la revendication 4 ou la revendication 5, dans lequel la détermination du nombre de cibles d'irradiation (7) passant par le conduit (5) comprend l'application d'un algorithme de reconnaissance de formes au signal intermédiaire ($s_{int}$(t)).

7. Système de transport (1 ; 100) selon la revendication 6, dans lequel l'algorithme de reconnaissance de formes est un algorithme de détection de bord.

8. Système de transport (1 ; 100) selon la revendication 7, dans lequel l'application de l'algorithme de détection de bord comprend l'application d'un comparateur pour transformer le signal intermédiaire ($s_{int}(t)$) en un signal binaire final ($s_f(t)$).

9. Système de transport (1 ; 100) selon la revendication 8, dans lequel l'étape de détermination du nombre de cibles d'irradiation (7) passant par le conduit (5) comprend en outre le comptage du nombre de cibles d'irradiation (7) sur la base du signal binaire final ($s_f(t)$), notamment en comptant les impulsions dans le signal final ($s_f(t)$) ayant une largeur supérieure ou égale à un seuil prédéterminé.

10. Système de transport (1 ; 100) selon l'une quelconque des revendications 4 à 9, dans lequel le procédé comprend en outre, avant l'application de l'algorithme de reconnaissance de forme, une étape d'application d'un algorithme de déconvolution au signal intermédiaire ($s_{int}(t)$).

11. Système de transport (1 ; 100) selon l'une quelconque des revendications précédentes, dans lequel le système de comptage (12) comprend exactement deux capteurs de distance (15) à un emplacement axial donné le long du conduit (5), lesdits capteurs de distance (15) se faisant face le long d'une direction radiale du conduit (5).

12. Système de production de radionucléides comprenant un système de transport de cible (1 ; 100) selon l'une quelconque des revendications précédentes, ledit système de transport de cibles (1 ; 100) étant configuré pour insérer les cibles d'irradiation (7) dans un ordre linéaire prédéterminé dans un emplacement prédéterminé du coeur du réacteur nucléaire.

13. Système de production de radionucléides selon la revendication 12, comprenant en outre au moins un tube de guidage s'étendant dans le coeur du réacteur nucléaire, ledit système de transport de cibles (1 ; 100) étant configuré pour insérer les cibles d'irradiation (7) dans le tube de guidage dans un ordre linéaire prédéterminé.

14. Système de production de radionucléides selon la revendication 12 ou la revendication 13, dans lequel le réacteur nucléaire est un réacteur à eau lourde.

15. Procédé de comptage de cibles d'irradiation (7) passant à travers un conduit (5) dans un système de production de radionucléides utilisant le système de transport de cible (1 ; 100) selon l'une quelconque des revendications 1 à 9, ledit procédé comprenant les étapes suivantes :

   - recevoir les signaux de distance ($s_1(t)$, $s_2(t)$ ; $s_1(t)$, $s_2(t)$, $s_3(t)$) des capteurs de distance (15) ;
   - calculer un signal intermédiaire ($s_{int}(t)$) dont

l'amplitude dépend de la somme des signaux de distance ($s_1(t)$, $s_2(t)$ ; $s_1(t)$, $s_2(t)$, $s_3(t)$) provenant des capteurs de distance (15) ; et
   - déterminer le nombre de cibles d'irradiation (7) passant par le conduit (5) sur la base du signal intermédiaire ($s_{int}(t)$).

16. Procédé selon la revendication 15, dans lequel la détermination du nombre de cibles d'irradiation (7) passant par le conduit (5) comprend l'application d'un algorithme de reconnaissance de forme au signal intermédiaire ($s_{int}(t)$).

17. Procédé selon la revendication 16, dans lequel l'algorithme de reconnaissance de forme est un algorithme de détection de bord.

18. Procédé selon l'une quelconque des revendications 15 à 17, dans lequel l'étape de calcul du signal intermédiaire ($s_{int}$) comprend la somme des signaux de distance ($s_1(t)$, $s_2(t)$ ; $s_1(t)$, $s_2(t)$, $ss(t)$) provenant des capteurs de distance (15), le signal intermédiaire ($s_{int}(t)$) correspondant notamment ou étant proportionnel à la somme des signaux de distance ($s_1(t)$, $s_2(t)$ ; $s_1(t)$, $s_2(t)$, $s_3(t)$) provenant des capteurs de distance (15).

Figure 1

1

7

12

15

15

5

Figure 2

26

15

18

36

26

20

Figure 3

Figure 4

```
┌─────────────────────┐
│       -100-         │
└─────────────────────┘
           │
           ▼
┌─────────────────────┐
│       -102-         │
└─────────────────────┘
           │
           ▼
┌─────────────────────┐
│       -104-         │
└─────────────────────┘
```

Figure 5

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017012655 A
- US 2013170927 A1
- WO 2016207054 A1
- WO 2017012655 A1